# EUROPEAN PATENT APPLICATION

(11) **EP 4 131 824 A1**
(43) Date of publication of application: **08.02.2023**
(21) Application number: 20929051.9
(22) Date of filing: 31.03.2020
(51) Int. Cl.: H04L 5/00

(54) **DATA TRANSMISSION METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2020/082554
(87) International publication number: WO 2021/196006

(57) **Abstract**

The embodiments of the present disclosure provide a data transmission method and apparatus, a communication device and a storage medium. The data transmission method applied to a station STA comprises: determining a first message containing a traffic indication map (TIM) broadcast request information element (IE), the TIM broadcast request IE being at least used for indicating traffic connections for receiving downlink traffic; and sending the first message on one of the plurality of traffic connections.

## Description

### TECHNICAL FIELD

The disclosure relates to but not limited to the field of wireless communication technologies, especially a data transmission method, a data transmission apparatus, a communication device and a storage medium.

### BACKGROUND

The Institute of Electrical and Electronics Engineers (IEEE) created a study group (SG) to evaluate next-generation mainstream Wi-Fi technologies including the IEEE802.11be standard, such as Wi-Fi transmission up to 320MHz bandwidth, aggregation and cooperative technologies of multiple frequency bands. The proposed vision of the 802.11be standard is to increase the speed and throughput by at least four times compared to the existing IEEE802.1lax standard. The main application scenarios for the new technologies are video transmission, Augmented Reality (AR) and Virtual Reality (VR).

The aggregation and cooperative technologies of multiple frequency bands refers to simultaneous communication among Wi-Fi devices through traffic links in different frequency bands such as 2.4GHz, 5.8GHz and 6-7GH, or through traffic links of different bandwidths in the same frequency band.

### SUMMARY

The embodiments of the disclosure provide a data transmission method and a data transmission apparatus, a communication device, and a storage medium.

Embodiments of the first aspect of the disclosure provide a data transmission method. The method includes:
determining a first message containing a Traffic Indication Map (TIM) broadcast request Information Element (IE), in which the TIM broadcast request IE is configured to indicate traffic links for receiving downlink traffic buffered by an Access Point (AP), and the traffic links indicated by the TIM broadcast request IE refer to one or more of multiple traffic links of a Station (STA); and
sending the first message on one of the multiple traffic links.

Embodiments of the second aspect of the disclosure provide a data transmission method. The method includes:
receiving a first message on one traffic link of a Station (STA), in which the first message includes a Traffic Indication Map (TIM) broadcast request Information Element (IE); and
determining one or more traffic links for receiving downlink traffic buffered by an Access Point (AP) from multiple traffic links of the STA based on the TIM broadcast request IE.

Embodiments of the third aspect of the disclosure provide a data transmission apparatus, applied to a Station (STA). The method includes: a determining module and a first sending module.

The determining module is configured to determine a first message containing a Traffic Indication Map (TIM) broadcast request Information Element (IE), in which the TIM broadcast request IE is at least configured to indicate traffic links for receiving downlink traffic.

The first sending module is configured to send the first message on one of multiple traffic links.

Embodiments of the fourth aspect of the disclosure provide a data transmission apparatus, applied to an Access Point (AP). The apparatus includes: a second receiving module and a determining module.

The second receiving module is configured to receive a first message on one traffic link of a station (STA), in which the first message includes a Traffic Indication Map (TIM) broadcast request Information Element (IE).

The determining module is configured to determine one or more traffic links for receiving downlink traffic from multiple traffic links of the STA based on the TIM broadcast request IE.

Embodiments of the fifth aspect of the disclosure provide a communication device including a processor, a transceiver, a memory and executable programs stored on the memory and capable of being executed by the processor. When the processor runs the executable programs, steps of the data transmission method of the first aspect or the data transmission method of the second aspect are implemented.

Embodiments of the sixth aspect of the disclosure provide a storage medium having executable programs stored thereon. When the executable programs are executed by a processor, steps of the data transmission method of the first aspect or the data transmission method of the second aspect are implemented.

According to the technical solution of the embodiments of the disclosure, the first message carrying the TIM broadcast request IE can be sent by one traffic link of the STA. Compared with separate negotiation for each traffic link, one or more traffic links of the STA are negotiated at one time for receiving the downlink traffic, so that the signaling overhead can be reduced, thereby improving throughput of the wireless communication system, improving negotiation efficiency and reducing delay. Therefore, the STA can obtain buffered downlink traffic during multi-link communication, so as to satisfy the vision of IEEE802.11 to improve system throughput and reduce delay.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram illustrating a wireless communication system according to examples of the disclosure.
FIG. 2 is a flowchart illustrating an information transmission method according to examples of the disclosure.
FIG. 3 is a flowchart illustrating an information transmission method according to examples of the disclosure.
FIG. 4 is a schematic diagram illustrating a TIM broadcast request IE according to examples of the disclosure.
FIG. 5 is a schematic diagram illustrating another TIM broadcast request IE according to examples of the disclosure.
FIG. 6 is a schematic diagram illustrating a TIM broadcast response IE according to examples of the disclosure.
FIG. 7 is a schematic diagram illustrating a state field according to examples of the disclosure.
FIG. 8 is a flowchart illustrating an information transmission method according to examples of the disclosure.
FIG. 9 is a flowchart illustrating another information transmission method according to examples of the disclosure.
FIG. 10 is a schematic diagram illustrating an information transmission apparatus according to examples of the disclosure.
FIG. 11 is a schematic diagram illustrating an information transmission apparatus according to examples of the disclosure.
FIG. 12 is a schematic diagram illustrating a User Equipment (UE) according to examples of the disclosure.
FIG. 13 is a schematic diagram illustrating a base station according to examples of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second, and third may be used in this disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the terms "if' and "in response to" as used herein can be interpreted as "when", "while" or "in response to determining".

In order to better describe any embodiment of the disclosure, embodiments of the disclosure take an application scenario of an intelligent gauge control system as an example for illustration purposes.

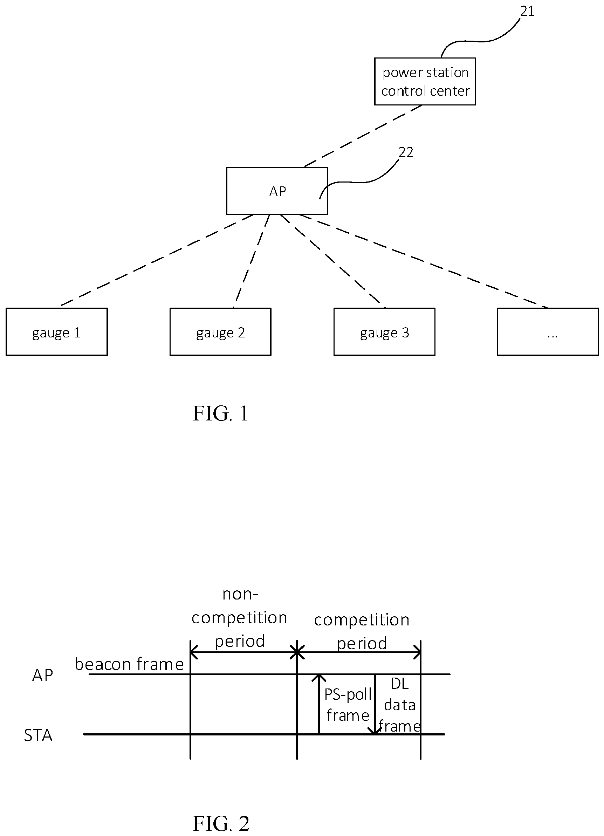

As illustrated in FIG. 1, embodiments of the disclosure provide an application scenario of an intelligent gauge control system. As illustrated in FIG. 1, the intelligent gauge control system includes a power station control center 21, an access point (AP) 22, a first gauge 1, a second gauge 2 and a third gauge 3. It should be noted that the power station control center 21 may be an intelligent gateway in the intelligent gauge control system. The AP can be a router. The gauges are the stations (STAs) in embodiments of the disclosure. According to the scheduling requirements of the intelligent control system, the power station control center can send a scheduling instruction to the AP, to instruct the AP to configure the stored buffered data for the gauges. In order to save power, the gauges may be in a sleep state, but the gauges still need to obtain the buffered data from the AP, to execute corresponding application functions in real time.

FIG. 2 is a schematic diagram illustrating a method for obtaining buffered data by a STA in a sleep status according to embodiments of the disclosure. As illustrated in FIG. 2, before entering the sleep status, the STA will negotiate the wake-up period with the AP to monitor the beacon frame. The STA wakes up periodically to monitor the beacon frame sent by the AP, and parses the traffic indication map (TIM) to know whether the AP has buffered the downlink traffic of the STA. If the AP has buffered the downlink traffic of the STA, the STA sends a Power Saving poll (PS-poll) frame during a competition period, to obtain resources to receive the downlink data buffered by the AP. There are two methods to send the PS-poll frame.

In the first method, the STA sends the PS-poll frame through a link of receiving the beacon frame, and simultaneously receives the buffered downlink traffic through multiple traffic links.

In the second method, in each link, the PS-poll frame is sent, and the buffered downlink traffic is received independently. In this way, the time of receiving the buffered downlink traffic in different links may be the same or different. Embodiments of the disclosure provide a method for obtaining buffered data by a STA being in a sleep status. Before entering the sleep status, the STA will negotiate the wake-up period with the AP, and periodically obtain, within a Service Period (SP) specified by the AP, the downlink traffic that is buffered by the AP for the STA. The STA negotiates the wake-up period with the AP. In the non-competition period, the AP sends the downlink traffic buffered by the AP through a non-contention poll frame. Here, the non-contention poll frame is sent by the AP to the STA, for example, under each frequency band, and the STA receives the buffered downlink traffic based on the non-contention poll frame.

The frequencies used by the traffic links are different. For example, the frequencies used by the traffic links may be one or more of 2.4GHz, 5.8GHz and 6-7GHz.

The downlink traffic mentioned in embodiments of the disclosure includes: downlink service data and/or downlink control signaling.

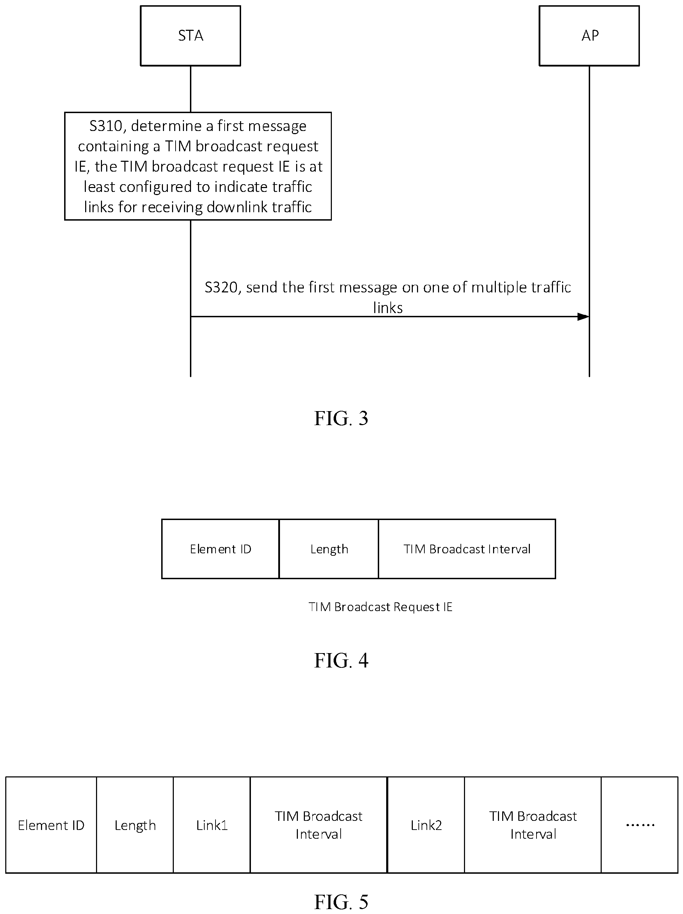

As illustrated in FIG. 3, embodiments of the disclosure provide a data transmission method performed by a STA. The method includes the following blocks.

At block S310, a first message containing at least one TIM broadcast request Information Element (IE) is determined. The TIM broadcast request IE is configured to at least indicate traffic links for receiving downlink traffic.

At block S320, the first message is sent on one of multiple traffic links.

The above mentioned "downlink traffic" includes but is not limited to: downlink traffic buffered by the AP.

The above mentioned "multiple traffic links" are of the same STA that supports multi-traffic links.

In embodiments of the disclosure, the STA such as a water meter, an electricity meter or a wearable device, sends the first message carrying the TIM broadcast request IE. The TIM broadcast request IE is configured to indicate one or more traffic links for receiving the downlink traffic. In this way, one TIM broadcast request IE of the first message may carry indication information for indicating one or more traffic links for receiving the downlink traffic (e.g., downlink data buffered by the AP), so that one or more traffic links are indicated for receiving the downlink traffic. In this way, the indication performed by the STA on whether traffic links are used for receiving the downlink traffic for example buffered by the AP can be completed on one traffic link, which is equivalent to sending and negotiating separately on each of the traffic links, thereby reducing signaling overhead.

In some embodiments, the first message and the second message may be sent separately in the form of frame. At this time, the first message may correspond to a first message frame and the second message may correspond to a second message frame. Alternatively, the first message and the second message may be sent in the form of subframe. The specific form is not limited here.

In some embodiments, the TIM broadcast request IE may be configured for negotiating, between the STA and the AP, a traffic period of the TIM information on a traffic link for sending the TIM broadcast request IE. In embodiments of the disclosure, the TIM broadcast request IE is expanded, such that multiple TIM broadcast request IEs sent on one traffic link may carry link information on whether a plurality of traffic links are recommended for receiving the downlink traffic buffered by the AP. In this way, it is easy to realize the indication of the recommendation, made by the STA supporting the multi-traffic links, for receiving the downlink traffic buffered by the AP by expanding the original TIM broadcast request IE without introducing a new IE.

FIG. 4 illustrates the information structure of the TIM broadcast request IE, and FIG. 5 illustrates one or more traffic links recommended by the STA for receiving the downlink traffic buffered by the AP. In FIGS. 4 and 5, the "element identity (ID)" is configured to indicate the identity of the TIM broadcast request IE. The "length field" in FIG. 4 and FIG. 5 is configured to indicate the length of the TIM broadcast request IE, i.e., the number of bits occupied by the TIM broadcast request IE. The "link identifier" is configured to carry the traffic links recommended by the STA for receiving the downlink traffic buffered by the AP, such as, Link 1 and Link 2 in FIG. 5.

In embodiments of the disclosure, the "traffic link" may also be simply referred to as the "link", and thus one traffic link and one like are synonymous.

In embodiments of the disclosure, the STA may be any type of terminal devices that support multiple traffic links. The STA may establish multiple traffic links with the AP on one or more bandwidths.

For example, when the STA is in the sleep status to save power or in a status incapable of receiving information, once the AP receives downlink traffic that is to be sent to the STA by another device, the AP will buffer the received data that is to be sent to the STA since the STA is in the sleep status or in the status incapable of receiving information. In response to determining that the STA enters an active status or a status capable of receiving information, the AP sends, to the STA, the downlink traffic that is buffered by the AP for the STA through one or more traffic links established with the STA.

In some embodiments, the downlink traffic is downlink data, or the downlink traffic is signaling, or the downlink traffic is a combined traffic of downlink data and signaling.

The above mentioned "one or more traffic links" are one or more of the multiple traffic links established between the STA and the AP.

For example, in some embodiments, one STA has M traffic links, and M bit sequences (the number of bit sequences is M) are set in the TIM broadcast request IE. One bit sequence is configured to indicate link information of one traffic link. The link information includes but is not limited to: a link ID of the traffic link, indication information on whether the traffic link is one of the traffic links recommended by the STA for receiving downlink data packets buffered by the AP. In this way, after the AP receives the TIM broadcast request IE, the AP knows which traffic links are currently recommended by the STA for transmitting, to the STA, the downlink traffic buffered by the AP.

In some embodiments, the link information may also include link parameters of each traffic link. In some embodiments of the disclosure, the link parameters of a traffic link include but are not limited to: a traffic period of the TIM information. The traffic period may be carried by a TIM broadcast interval field included in the TIM broadcast response IE.

In some embodiments, the link information indicated by the M bit sequences in one TIM broadcast request IE sent by the STA includes one traffic link. That is, one traffic link is recommended for receiving the downlink traffic and the remaining traffic links are not recommended for receiving the downlink traffic buffered by the AP. For example, the link information indicated by the M bit sequences in the TIM broadcast request IE sent by the STA on the traffic link 3 (i.e., Link 3) includes only one traffic link 1 (e.g., Link 1). That is, only one traffic link (i.e., Link 1) is recommended for receiving the downlink traffic, and the remaining traffic links are not recommended for receiving the downlink traffic buffered by the AP.

That is, the STA sends the TIM broadcast request IE on one traffic link and the TIM broadcast request IE includes indication information for indicating one or more traffic links. These indicated traffic links may or may not be configured to send the TIM broadcast request IE. Alternatively, these indicated traffic links include a traffic link configured to send the TIM broadcast request IE and other traffic links.

In some embodiments, the TIM broadcast request IE carries the link ID(s) of one or more traffic links recommended by the STA for receiving the downlink traffic buffered by the AP. For example, since the traffic frequency bands or traffic sub-bands used by the multiple traffic links of the STA are different, in a wireless environment including multiple STAs and multiple APs, traffic interferences on different traffic frequency bands or traffic sub-bands are different, that is, channel qualities of different traffic links are different. The STA can select one or more high-quality traffic links according to the channel qualities of the traffic links of the STA as the one or more traffic links recommended by the STA for sending, by the AP, the buffered downlink traffic. In this way, the reception quality of the downlink traffic can be ensured.

For example, since the STA supporting the multi-traffic links may be connected to the same AP or different APs, during the traffic process, the loads of some traffic links are relatively large, in order to improve communication quality and achieve load balancing, the STA may recommend, according to the load condition and through the TIM broadcast request IE, one or more traffic links to the AP for receiving the downlink traffic buffered by the AP. For example, one or more traffic links with low loads are recommended through the TIM broadcast request IE to the AP for receiving the downlink traffic buffered by the AP.

In conclusion, compared with separately negotiating whether to receive the buffered downlink data on each of the multiple traffic links, using one TIM broadcast request IE to negotiate with the AP on the condition of receiving, by the multiple traffic links, the downlink traffic buffered by the AP in the disclosure can reduce the signaling overhead and improve the negotiation efficiency.

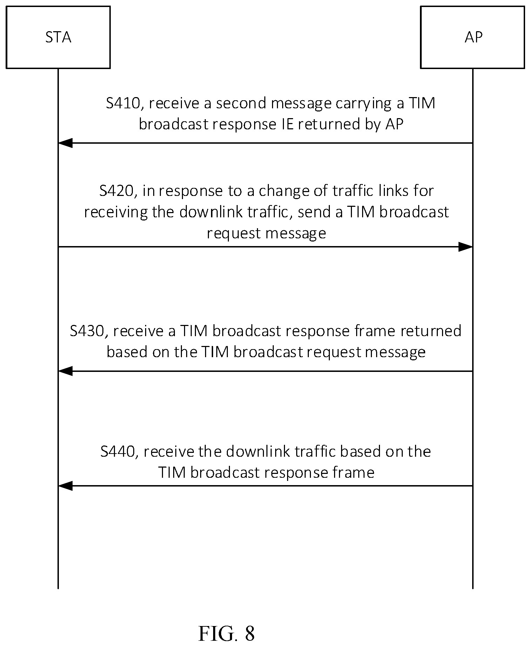

As illustrated in FIG. 8, embodiments of the disclosure provide a data transmission method, applied to a STA. The method includes the following blocks.

At block S410, a second message carrying a TIM broadcast response IE returned by the AP is received.

In some embodiments, the second message is generated by the AP based on the TIM broadcast request IE in the first message. That is, the AP generates the TIM broadcast response IE according to the TIM broadcast request IE, so that the STA can determine that the downlink traffic buffered by the AP is transmitted on one or more traffic links indicated by the TIM broadcast request IE. In some embodiments, the second message is generated by the AP based on the TIM broadcast request IEs in any format sent by the STA in the related art. That is, the STA sends respective TIM broadcast request IEs corresponding to the traffic links respectively on the traffic links, and the AP can also generate one second message according to all these TIM broadcast request IEs, and the second message includes the TIM broadcast response IEs generated based on the respective TIM broadcast request IEs of the traffic links.

After the AP receives the first message, sent by the STA, for indicating one or more traffic links, the AP returns the second message to the STA. The second message includes the TIM broadcast response IE. The TIM broadcast response IE is configured to indicate whether the AP accepts to transmit the downlink traffic buffered by the AP on the one or more traffic links recommended by the STA.

In embodiments of the disclosure, the second message may carry the TIM broadcast response IE and be returned by the AP based on the first message.

In some embodiments, the second message may be a reply to a third message. For example, a terminal sends the third message, on which traffic link the third message is sent, and then whether that traffic link is used to receive the downlink traffic is indicated by the third message. As an example, the third message is sent on the Link 1 and the third message is configured to indicate whether the Link 1 is used to receive the downlink traffic buffered by the AP.

In some embodiments, the TIM broadcast response IE includes a status field. The status field includes at least first indication bits.

A value of the first indication bit is a first bit value, and the first indication bit is configured to indicate to accept (or agree) to transmit the downlink traffic buffered by the AP on the a traffic link indicated by the TIM broadcast request IE; or, a value of the first indication bit is a second bit value, and the first indication bit is configured to indicate to refuse to transmit the downlink traffic buffered by the AP on a traffic link indicated by the TIM broadcast request IE.

The status field is set in the TIM broadcast response IE, and the status field may include one or more bits. These bits all have specific indication meanings. In the related arts, some bits of the TIM broadcast response IE have clear indication definitions, but some are reserved bits. The first indication bit in the disclosure is one of the reserved bits or a newly added bit.

The above mentioned "first indication bit" may be one bit or two or more bits. When the first indication bit is 1 bit, the value of the first indication bit has the bit value either "0" or "1". When the first bit value is "0", the second bit value is "1", and when the first bit value is "1", the second bit value is "0". Therefore, based on one or more first indication bits included in the status field in the TIM request response IE, the AP can explicitly reply whether the AP accepts to adopt the one or more traffic links recommended by the STA to transmit the downlink traffic buffered by the AP.

In some embodiments, the status field includes a plurality of reserved values, and two reserved values can be selected from the status field to allow the AP to indicate whether the AP accepts to receive the downlink traffic buffered by the AP on the one or more traffic links recommended by the STA.

The AP may be connected to multiple STAs. According to the traffic links between the AP and the multiple STAs, it is possible to determine that a certain or some traffic links recommended by the current STA for receiving the downlink traffic buffered by the AP are severely interfered, then the AP may not accept to receive the downlink traffic data frames buffered by the AP on these traffic links. In embodiments of the disclosure, each traffic link in the TIM broadcast response IE may correspond to a respective status field. Thus, in the TIM broadcast request IE, each traffic link recommended by the STA for receiving the downlink traffic buffered by the AP can be provided with an indication of a bit value of the first indication bit in the status field corresponding to the traffic link on whether the AP accepts to receive the downlink traffic buffered by the AP on the traffic link.

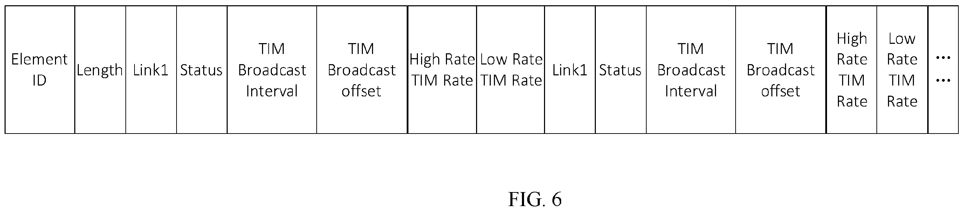

FIG. 6 is a schematic diagram illustrating a TIM broadcast response IE according to embodiments of the disclosure. The TIM broadcast response IE illustrated as FIG. 6 includes: an element identity (ID), a length field indicating the bit length of the TIM broadcast response IE, status fields, TIM broadcast interval fields, TIM broadcast offset fields, a high rate TIM rate fields and low rate TIM rate fields. The TIM broadcast offset field is configured to indicate an offset of the TIM information transmission. The high rate TIM rate field is configured to indicate highspeed TIM transmission rate. The low rate TIM rate field is configured to indicate a low-speed TIM transmission rate.

In some embodiments, the TIM broadcast request IE and the TIM broadcast response IE both include: the TIM broadcast interval fields configured to indicate traffic periods of the TIM information. The TIM information is configured to indicate a STA to receive the downlink traffic buffered by the AP.

The TIM broadcast request IE and the TIM broadcast response IE both are originally intended to be used for negotiating the traffic period of the TIM information of the traffic link for transmitting the TIM broadcast request IE, and thus they both include the TIM broadcast interval fields. Each TIM broadcast interval field is configured to indicate the traffic period of the TIM information.

The TIM information is the downlink data buffered by the AP itself for each STA and can be transmitted periodically. The TIM information may carry Association Identities (AIDs). The AID is an identifier allocated by the AP to a STA. After the STA receives the TIM information, if the TIM information carries all the AIDs of the STA, the STA knows that the AP has buffered the downlink traffic for the STA, and the STA needs to receive the downlink traffic buffered by the AP.

For example, after the STA enters the sleep status, the STA can periodically wake up and monitor the beacon frame broadcasted by the AP, to receive the TIM information carried in the beacon frame.

If the STA discovers its own TIM information in the TIM information of the monitored beacon frame, the STA will receive the downlink traffic buffered by the AP on the one or more traffic links determined between the AP and the STA based on the TIM broadcast request IE and/or the TIM broadcast response IE, i.e., based on the negotiation with the AP.

In some cases, the AP may allocate one AID for one STA. In other embodiments, the AP may allocate multiple AIDs for one STA capable of multi-traffic links, i.e., one traffic link corresponds to one AID, or 2 or more traffic links share one AID. In conclusion, once the AP allocates the AID(s) to the STA, the allocated AID(s) will be issued to the STA. For example, the AID(s) may be issued to the STA through the TIM broadcast response IE during the process of initial association or re-association between the AP and the STA.

In conclusion, in embodiments of the disclosure, after receiving the TIM broadcast response IE, the STA will determine the traffic period for receiving the TIM information according to the TIM broadcast interval fields, and receive the TIM information at an interval of the traffic period, to confirm whether there is buffered downlink traffic.

In some embodiments, in response to the TIM broadcast response IE indicating to accept to receive the downlink traffic on the one or more traffic links indicated by the TIM broadcast request IE, the method includes: in response to the TIM broadcast response IE indicating that the AP accepts and the TIM information indicating that there is downlink data buffered by the AP to be received, receiving the downlink traffic on the one or more traffic links indicated by the TIM broadcast request IE.

For example, if the TIM broadcast response IE indicates that the AP accepts to adopt the one or more traffic links recommended by the STA, through the TIM broadcast request IE, for receiving the downlink traffic data frame buffered by the AP, subsequently, the STA will receive the downlink traffic buffered by the AP for the STA on the one or more recommended traffic links.

For example, the STA may purpose, through in the TIM broadcast request IE to transmit the downlink traffic buffered by the AP on M traffic links of its own N traffic links. At this time, the AP may indicate through the TIM broadcast response IE to accept to transmit the downlink traffic buffered by the AP on m traffic links, and to refuse to transmit the downlink traffic buffered by the AP on the remaining (M-m) traffic links. Subsequently, the STA may receive the downlink traffic buffered by the AP on the m traffic links allowed by the AP. If the TIM broadcast response IE rejects all the traffic links recommended by the STA in the TIM broadcast request IE for receiving the downlink traffic date frame buffered by the AP, in one case, the STA may renegotiate the traffic links for receiving the downlink traffic buffered by the AP with the AP by resending the TIM broadcast request IE based on the one or more traffic links recommended by the STA in the previous TIM broadcast request IE.

In another case, if the AP rejects all traffic links recommended by the STA for receiving the downlink traffic buffered by the AP, the AP will directly indicate the traffic links for receiving the downlink traffic buffered by the AP through the TIM broadcast response IE. For example, a third indication bit can be included in the status field of the traffic link, and the third indication bit is configured to indicate that the traffic link is determined by the AP for receiving downlink traffic buffered by the AP. In this way, the negotiation duration can be shortened and the determination efficiency can be improved.

In some embodiments, the method further includes: in response to a traffic period indicated by a TIM broadcast interval field contained in the TIM broadcast request IE being different from a traffic period indicated by a corresponding TIM broadcast interval field contained in the TIM broadcast response IE, receiving the TIM information sent by an AP based on the traffic period indicated by the corresponding TIM broadcast interval field contained in the TIM broadcast response IE; or, in response to a traffic period indicated by a TIM broadcast interval field contained in the TIM broadcast request IE being identical to a traffic period indicated by a corresponding TIM broadcast interval field contained in the TIM broadcast response IE, receiving the TIM information sent by an AP based on the traffic period indicated the TIM broadcast interval field contained in the TIM broadcast response IE or the traffic period indicated the corresponding TIM broadcast interval field contained in the TIM broadcast request IE.

For the same traffic link, the traffic periods of TIM information indicated by the TIM broadcast interval fields contained in the TIM broadcast request IE and the TIM broadcast response IE may or may not be identical. Considering that the AP may be connected to multiple STAs at the same time, in order to ensure the communication quality, differential traffic period setting is adopted based on different wireless environments and/or loads of the traffic links of the AP, to ensure the communication quality. Therefore, if the traffic periods of the TIM information indicated by the AP and the STA for the same traffic link are different, the traffic period indicated by the AP in the TIM broadcast interval field included in the TIM broadcast response IE is determined as the traffic period.

In some embodiments, in setting the TIM broadcast interval fields by the STA, the traffic periods of the TIM information of the one or more traffic links recommended by the STA for receiving the downlink traffic buffered by the AP may be less than the traffic periods of the TIM information of other traffic links that are not recommended by the STA for receiving the downlink traffic buffered by the AP. In this way, it is possible to reduce the monitoring frequency of the TIM information on the traffic links on which it is very likely that it is unnecessary to receive the downlink traffic buffered by the AP, thus the power consumption of the STA can be further reduced. At the same time, if the traffic periods of the TIM information of the one or more traffic links recommended by the STA for receiving the downlink traffic buffered by the AP is set to be more smaller, once the recommended traffic links are confirmed by the AP, it is possible to determine whether the AP has buffered the downlink traffic for the STA based on the traffic links during the smaller traffic periods. If the AP has buffered the downlink traffic for the STA, the STA will receive the downlink traffic buffered by the AP for the STA in real time.

In another embodiment, in setting the TIM broadcast interval fields by the AP, the traffic periods of TIM information of the determined traffic links for receiving the downlink traffic buffered by the AP may be smaller than the traffic periods of the TIM information of other traffic links that are not used for receiving the downlink traffic buffered by the AP. In this way, it is possible to reduce the monitoring frequency of TIM information on the traffic links on which it is very likely that it is unnecessary to receive the downlink traffic buffered by the AP, thus the power consumption of the STA can be further reduced. In the same way as in the above embodiment, this can also reduce the delay of receiving by the STA the downlink traffic buffered by the AP.

In a specific case, if the STA and the AP determine, through the interaction between the TIM broadcast request IE and the TIM broadcast response IE, that the traffic periods indicated by the TIM broadcast interval fields of the traffic links that are not used for receiving the downlink traffic buffered by the AP are the maximum value indicated by the TIM broadcast interval field, in some embodiments, the TIM broadcast response IE further includes a status field. The status field includes at least second indication bits.

The second indication bit carries a first bit value and the TIM information indicated by a TIM broadcast interval field contained in the TIM broadcast request IE is different from the TIM information indicated by a corresponding TIM broadcast interval field contained in the TIM broadcast response IE; or, the second indication bit carries a second bit value, and the TIM information indicated by a TIM broadcast interval field contained in the TIM broadcast request IE is identical to the TIM information indicated by a corresponding TIM broadcast interval field contained in the TIM broadcast response IE.

In some embodiments of the disclosure, the status field further includes a second indication bit which is configured to indicate whether the AP recommends to adopt the traffic period of the TIM information set for a corresponding traffic link by the TIM broadcast interval field in the TIM broadcast request IE.

If the AP accepts to adopt the traffic period of TIM information set by the STA for the corresponding traffic link, the AP will indicate this by the second indication bit in the status field. In this way, after receiving the TIM broadcast response IE, the STA knows whether the AP accepts to adopt the traffic period for monitoring the TIM information on the traffic link recommended by the STA through decoding the contents of the status field. If the AP accepts, it is unnecessary to continue to decode the TIM broadcast interval fields included in the TIM broadcast response IE. If the AP does not accept, it is necessary to continue decoding the TIM broadcast interval fields to determine the traffic period of the TIM information set by the AP for the traffic link.

In some embodiments, the status filed includes a plurality of bits and can carry multiple bit sequences. Two of these bit sequences can be used to indicate whether the AP accepts to adopt the traffic periods of TIM information suggested by the TIM broadcast intervals in the TIM broadcast request IE.

In some embodiments, in the TIM broadcast request IE, the traffic periods of TIM information indicated by the TIM broadcast interval fields of different traffic links are the same. Alternatively, in the TIM broadcast request IE, the traffic periods of TIM information indicated by the TIM broadcast interval fields of different traffic links are different. Additionally or alternatively, in the TIM broadcast response IE, the traffic periods of TIM information indicated by the TIM broadcast interval fields of different traffic links are the same. Alternatively, in the TIM broadcast response IE, the traffic periods of TIM information indicated by the TIM broadcast interval fields of different traffic links are different.

In the TIM broadcast request IE and/or the TIM broadcast response IE, a respective TIM broadcast interval field can be configured for each traffic link, so that the STA and/or the AP can set the traffic periods of the TIM information for the traffic links respectively. Therefore, in setting the traffic periods of the TIM information for multiple traffic links, the traffic periods of TIM information of any two of the traffic links may be the same or different.

For example, the STA and/or the AP can differentially set the traffic periods of the TIM information for different traffic links according to the channel environment, competition incentive level and/or load rate of the traffic links, so as to ensure the communication quality.

As illustrated in FIG. 8, embodiments provide a data transmission method, applied to a STA. The method includes the following blocks. At block S420, in response to a change of traffic links for receiving the downlink traffic, a TIM broadcast request message is sent.

At block S430, a TIM broadcast response frame returned based on the TIM broadcast request message is received.

At block S440, the downlink traffic is searched for and received based on the TIM broadcast response frame. The downlink traffic mentioned here includes the downlink traffic buffered by the AP.

After a period of time, the wireless environment between the STA and the AP changes. In order to ensure the communication quality and achieve efficient and high-quality data transmission as much as possible, the one or more traffic links previously negotiated between the STA and the AP for receiving the downlink traffic buffered by the AP need to be changed. For example, when the STA finds through channel monitoring that the channel qualities of the traffic links previously determined for receiving the downlink traffic buffered by the AP deteriorate, and the channel qualities of the traffic links previously determined not to be used to receive the downlink traffic buffered by the AP maintain a good state or a low load rate, the STA sends the TIM broadcast request message to the AP on one or more traffic links, and renegotiates with the AP on the traffic links for receiving the downlink traffic buffered by the AP.

At this time, the TIM broadcast request message may at least carry changed traffic links for receiving the downlink traffic buffered by the AP proposed by the STA. For example, the TIM broadcast request message carries a bit map of multiple traffic links of the STA. One bit in the bit map may correspond to one traffic link of the STA. In this way, the AP can be informed of the new or changed traffic links re-recommended by the STA for receiving the downlink traffic buffered by the AP through the indications of the bits in the bit map.

In some embodiments, the TIM broadcast request message may also carry the above-mentioned TIM broadcast request IE to receive the traffic links for receiving the downlink traffic buffered by the AP.

Whether the AP accepts to adopt the traffic links re-recommended by the STA for receiving the downlink traffic data frame can be indicated through the TIM broadcast response frame.

In conclusion, in embodiments of the disclosure, the STA and the AP can dynamically adjust the traffic links for receiving the downlink traffic buffered by the AP according to the current wireless environment and the load condition of each traffic link through the transmission and reception of the TIM broadcast request frame and the TIM broadcast response frame, so as to ensure the reception quality of the downlink traffic buffered by the AP.

Here, the TIM broadcast request frame and the TIM broadcast response frame can be a kind of management frame, for example, a new management frame, which can at least be configured for switching the traffic links between the STA and the AP for receiving the downlink traffic buffered by the AP.

Moreover, receiving the downlink traffic based on the TIM broadcast response frame includes: in response to the TIM broadcast response IE indicating to accept the change of the traffic links for transmitting the downlink traffic buffered by the AP, receiving the downlink traffic buffered by the AP on changed traffic links indicated by the TIM broadcast request message; or, in response to the TIM broadcast response frame indicating to refuse the change of the traffic links for receiving the downlink traffic buffered by the AP, receiving the downlink traffic buffered by the AP on the traffic links before the change indicated by the TIM broadcast request IE or the TIM broadcast response IE.

In some embodiments, the first message is an association request frame, a reassociation request frame or a TIM broadcast request frame; and/or, the second message is an association response frame or a TIM broadcast response frame.

In some embodiments, the block S310 may include: sending a first message on an initially associated traffic link or a re-associated traffic link.

In embodiments of the disclosure, the STA sends the first message on the traffic link used when the STA is initially associated with the AP or the STA is re-associated with the AP after the initial association is disconnected. The AP may send a second message on a traffic link initially associated with the STA or a traffic link re-associated with the STA, or may send the second message on other traffic links after the association between the AP and the STA is completed.

If the STA sends the first message on the initially associated traffic link or the re-associated traffic link, the first message can be sent by the STA in the initial association process or re-association process, and can complete the negotiation of the traffic links for receiving the downlink traffic buffered by the AP as soon as possible.

In some embodiments, the method illustrated in FIG. 8 can be used in combination with any of the above embodiments or alone, which is not limited in the disclosure.

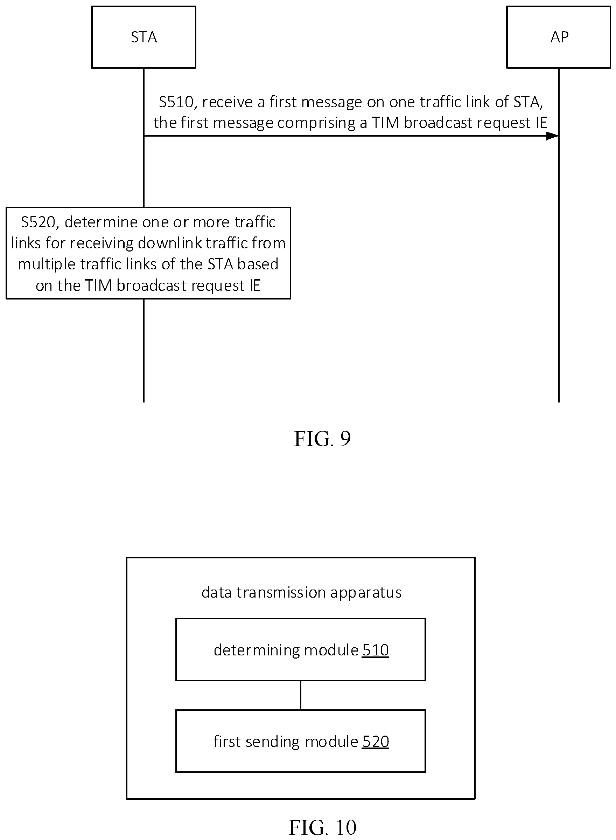

As illustrated in FIG. 9, embodiments of the disclosure provides a data transmission method, applied to an AP. The method includes the following blocks.

At block S510, a first message is received on one traffic link of a STA. The first message includes a TIM broadcast request IE.

At block S520, one or more traffic links for receiving the downlink traffic are determined from multiple traffic links of the STA based on the TIM broadcast request IE.

The above-mentioned "STA" can be a STA having the multiple traffic links.

The above-mentioned "downlink traffic" includes but is not limited to the downlink traffic buffered by the AP.

The embodiment of the disclosure is applied to the AP. After receiving the first message, the AP determines, from the multiple traffic links of the STA, one or more traffic links for receiving the downlink traffic buffered by the AP.

In embodiments of the disclosure, the AP may, based on the first message, conduct one-time negotiation which traffic links are used to receive the downlink traffic buffered by the AP with the STA having the multiple traffic links, which can reduce the signaling overhead, simplify the negotiation process between the STA and the AP and improve the negotiation efficiency, compared with separate negotiation on whether each traffic link is used to receive the downlink traffic buffered by the AP.

The block S520 includes: according to channel qualities of the multiple traffic links of the STA, competition incentive degrees of the multiple traffic links and/or load rates of the multiple traffic links, selecting the one or more traffic links with the channel qualities greater than a quality threshold value, the competition incentive degree less than a competition threshold value and/or the load rate less than a load threshold value, for receiving the downlink traffic buffered by the AP according to the determined TIM broadcast request IE.

In some embodiments, the block S520 includes: directly determining the one or more traffic links for receiving the downlink traffic buffered by the AP from traffic links recommended by the TIM broadcast request IE according to the channel qualities, the competition incentive degrees and/or the load rates of multiple traffic links of the STA; or, changing one or more traffic links for receiving the downlink traffic buffered by the AP determined from traffic links recommended by the TIM broadcast request IE according to the channel qualities, the competition incentive degrees and/or the load rates of the multiple traffic links of the STA.

In some embodiments, the method further includes: sending a second message carrying a TIM broadcast response IE to the STA based on whether the AP accepts to transmit the downlink traffic buffered by the AP on the traffic links indicated by the TIM broadcast request IE.

For example, the AP may consider whether to accept to adopt the traffic links indicated by the TIM broadcast request IE to receive the downlink traffic buffered by the AP according to factors such as the channel qualities and/or the load rates of the traffic links. The contents of the TIM broadcast response IE in the second message when the AP accepts is different from the contents of the TIM broadcast request IE in the second message when the refuses. For example, the first status bits for indicating to accept and to refuse in the TIM broadcast response IE are different.

In some embodiments, the TIM broadcast response IE includes a status field. The status field includes at least a first indication bit.

A value of the first indication bit is a first bit value, and the first indication bit is configured to indicate to accept to transmit the downlink traffic buffered by the AP on a traffic link indicated by the TIM broadcast request IE; or a value of the first indication bit is a second bit value, and the first indication bit is configured to indicate to refuse to transmit the downlink traffic buffered by the AP on a traffic link indicated by the TIM broadcast request IE.

In some embodiments, the TIM broadcast request IE and the TIM broadcast response IE both include: TIM broadcast interval fields. The TIM broadcast interval field is configured to indicate a traffic period of TIM information. The TIM information is configured to indicate a STA to receive the downlink traffic buffered by the AP.

In embodiments of the disclosure, the TIM broadcast request IE and the TIM broadcast response IE are not only configured to negotiate the traffic links for receiving the downlink traffic buffered by the AP, but also to negotiate respective traffic periods of the TIM information of the traffic links, so as to realize the negotiation of a variety of information in a group of interactive IEs, which is characterized by low signaling bit overhead.

In some embodiments, the method further includes: sending the TIM information according to the traffic periods of the TIM information indicated by the TIM broadcast interval fields in the TIM broadcast response IE.

For negotiating the traffic period of TIM information, the traffic period of TIM information is finally determined by the AP. That is, the TIM information is sent according to the traffic periods of the TIM information indicated by the TIM broadcast interval fields in the TIM broadcast response IE. For example, the TIM information is sent by sending a beacon frame.

For example, in the TIM broadcast request IE, the traffic periods of the TIM information indicated by the TIM broadcast interval fields of different traffic links are the same, or, in the TIM broadcast request IE, the traffic periods of the TIM information indicated by the TIM broadcast interval fields of different traffic links are different. Additionally or alternatively, in the TIM broadcast response IE, the traffic period of the TIM information indicated by the TIM broadcast interval fields of different traffic links are the same, or in the TIM broadcast response IE, the traffic periods of the TIM information indicated by the TIM broadcast interval fields of different traffic links are different.

For setting the respective traffic periods of the TIM information for the traffic links, the AP can comprehensively consider factors such as common frequency interference and adjacent frequency interference, load rate and/or power consumption of the STA, and set appropriate traffic periods of the TIM information for respective traffic links.

For example, in the case of good channel conditions, the traffic periods of the TIM information of multiple traffic links of the same STA can be the same, and the STA can wake up periodically to monitor the beacon frame, thus the wake-up frequency of the STA is reduced, and the power consumption of the STA can be further reduced.

In some embodiments, the TIM broadcast response IE includes a status field. The status field includes at least a second indication bit.

The TIM information indicated by a TIM broadcast interval field contained in the TIM broadcast request IE is different from the TIM information indicated by a corresponding TIM broadcast interval field contained in the TIM broadcast response IE, and a value of the second indication bit is a first bit value; or, the TIM information indicated by a TIM broadcast interval field contained in the TIM broadcast request IE is identical to TIM information indicated by a corresponding TIM broadcast interval field contained in the TIM broadcast response IE, and a value of the second indication bit is a second bit value.

In some embodiments, the status field in the TIM broadcast response IE further includes a second indication bit, and the AP can inform the STA on whether it allows or rejects the traffic period of the TIM information recommended by the STA.

In some embodiments, the method further includes: receiving a TIM broadcast request message; and sending a TIM broadcast response frame based on the TIM broadcast request message. The TIM broadcast response frame is configured to indicate whether to change the traffic links for receiving the downlink traffic.

In embodiments of the disclosure, if the STA determines that it needs to renegotiate with the AP to determine the traffic links for receiving the downlink traffic buffered by the AP, the STA will renegotiate with the AP through the TIM broadcast request message, and the AP will receive the TIM broadcast request message and respond to the TIM broadcast request message by sending a TIM broadcast response frame. At this time, the AP may allow or refuse the change of the traffic links for receiving the downlink traffic buffered by the AP.

In some embodiments, the AP may also initiate the negotiation of the traffic links for receiving the downlink traffic buffered by the AP through a beacon frame or a reassociation response frame.

In some embodiments, the method further includes: in response to the TIM broadcast response frame indicating to allow the change of the traffic links for receiving the downlink traffic, sending the downlink traffic on changed traffic links indicated by the TIM broadcast request message; or, in response to the TIM broadcast response frame indicating to refuse the change of the traffic links for receiving the downlink traffic, sending the downlink traffic on the traffic links before the change indicated by the TIM broadcast request IE or the TIM broadcast response IE.

In conclusion, in embodiments of the disclosure, the AP may reject or allow the traffic links re-recommended, through the TIM broadcast request frame, by the STA for receiving the downlink traffic.

In some embodiments, the first message is an association request frame, a reassociation request frame or a TIM broadcast request frame, and/or the second message is an association response frame or a TIM broadcast response frame.

In some embodiments, block S510 includes: receiving the second message on an initially associated traffic link or a re-associated traffic link.

As illustrated in FIG. 10, the embodiment provides a data transmission apparatus, applied to a STA. The apparatus includes: a determining module 510 and a first sending module 520.

The determining module 510 is configured to determine a first message containing a TIM broadcast request IE. The TIM broadcast request IE is at least configured to indicate traffic links for receiving downlink traffic. The first message is transmitted on one of multiple traffic links.

The first sending module 520 is configured to send the first message on one of multiple traffic links.

In some embodiments, the determining module 510 and the first sending module 520 may be program modules. After the program modules are executed by a processor, the first message can be generated and sent.

In some embodiments, the determining module 510 and the first sending module 520 may be hardware and software modules, which include but are not limited to various programmable arrays. The programmable arrays include but are not limited to field programmable array or complex programmable array.

In some embodiments, the determining module 510 and the first sending module 520 may be pure hardware modules, which include but are not limited to application specific integrated circuits.

In some embodiments, the apparatus further includes a first receiving module.

The first receiving module is configured to receive a second message carrying a TIM broadcast response IE returned based on the first message; and in response to the TIM broadcast response IE indicating to accept to transmit the downlink traffic on one or more traffic links indicated by the TIM broadcast request IE, receive the downlink traffic on the one or more traffic links indicated by the TIM broadcast request IE.

In some embodiments, the TIM broadcast response IE includes a status field. The status field includes at least a first indication bit.

A value of the first indication bit is a first bit value, and the first indication bit is configured to indicate to accept to transmit the downlink traffic on a traffic link indicated by the TIM broadcast request IE; or, a value of the first indication bit is a second bit value, and the first indication bit is configured to indicate to refuse to transmit the downlink traffic on a traffic link indicated by the TIM broadcast request IE.

In some embodiments, the TIM broadcast request IE and the TIM broadcast response IE both include TIM broadcast interval fields. The TIM broadcast interval field is configured to indicate a traffic period of TIM information. The TIM information is configured to indicate a STA to receive the downlink traffic.

In some embodiments, the first receiving module is further configured to: in response to the TIM broadcast response IE indicating to accept to transmit and the TIM information indicating that there is downlink data buffered by the AP to be received, receiving the downlink traffic on the one or more traffic links indicated by the TIM broadcast request IE.

In some embodiments, the first receiving module is further configured to: in response to a traffic period indicated by a TIM broadcast interval field contained in the TIM broadcast request IE being different from a traffic period indicated by a corresponding TIM broadcast interval field contained in the TIM broadcast response IE, receive the TIM information sent by an AP based on the traffic period indicated by the corresponding TIM broadcast interval field contained in the TIM broadcast response IE; or, the first receiving module is further configured to: in response to a traffic period indicated by a TIM broadcast interval field contained in the TIM broadcast request IE being identical to a traffic period indicated by a corresponding TIM broadcast interval field contained in the TIM broadcast response IE, receive the TIM information sent by an AP based on the traffic period indicated by the TIM broadcast interval field contained in the TIM broadcast response IE or the traffic period indicated by the corresponding TIM broadcast interval field contained in the TIM broadcast request IE.

In some embodiments, the TIM broadcast response IE includes a status field, and the status field includes at least a second indication bit.

The second indication bit carries a first bit value, and TIM information indicated by a TIM broadcast interval field contained in the TIM broadcast request IE is different from TIM information indicated by a corresponding TIM broadcast interval field contained in the TIM broadcast response IE; or, the second indication bit carries a second bit value, and TIM information indicated by a TIM broadcast interval field contained in the TIM broadcast request IE is identical to TIM information indicated by a corresponding TIM broadcast interval field contained in the TIM broadcast response IE.

In some embodiments, in the TIM broadcast request IE, traffic periods of the TIM information indicated by TIM broadcast interval fields of different traffic links are the same, or in the TIM broadcast request IE, traffic periods of the TIM information indicated by the TIM broadcast interval fields of different traffic links are different; and/or in the TIM broadcast response IE, traffic periods of the TIM information indicated by the TIM broadcast interval fields of the traffic links are the same, or in the TIM broadcast response IE, traffic periods of the TIM information indicated by the TIM broadcast interval fields of different traffic links are different.

In some embodiments, the first sending module 520 is configured to: in response to a change of the one or more traffic links for receiving the downlink traffic buffered by the AP, send a TIM broadcast request message.

The apparatus further includes a first receiving module.

The first receiving module is configured to receive a TIM broadcast response frame returned based on the TIM broadcast request message, and receive the downlink traffic based on the TIM broadcast response frame.

In some embodiments, the first receiving module is configured to: in response to the TIM broadcast response frame indicating to accept to change of the one or more traffic links for receiving the downlink traffic, receive the downlink traffic on changed traffic links indicated by the TIM broadcast request message; or, in response to the TIM broadcast response frame indicating to reject the change of the one or more traffic links for receiving the downlink traffic, receive the downlink traffic on the traffic links before the change indicated by the TIM broadcast request IE or the TIM broadcast response IE.

In some embodiments, the first message is a probe request frame or an association request frame; and/or, the second message is an association response frame or a TIM broadcast response frame.

In some embodiments, the first sending module 520 is configured to: send the first message on an initially associated traffic link or a re-associated traffic link.

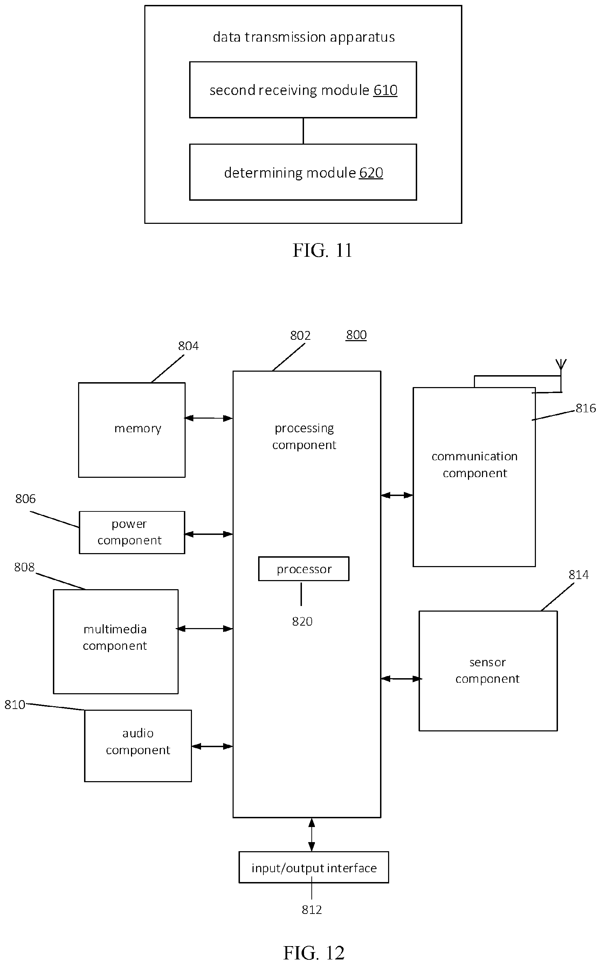

As illustrated in FIG. 11, the embodiment provides a data transmission apparatus, applied to an AP. The apparatus includes: a second receiving module 610 and a determining module 620.

The second receiving module 610 is configured to receive a first message on one traffic link of a STA. The first message includes a TIM broadcast request IE.

The determining module 620 is configured to determine one or more traffic links for receiving downlink traffic from multiple traffic links of the STA based on the TIM broadcast request IE.

In some embodiments, the first receiving module and the determining module 620 may be program modules. After the program modules are executed by a processor, the first message is received and the one or more traffic links for receiving the downlink traffic buffered by the AP are determined.

In some embodiments, the first receiving module and the determining module 620 may be hardware and software modules, which include but are not limited to various programmable arrays. The programmable arrays include but are not limited to field programmable array or complex programmable array.

In some embodiments, the first receiving module and the determining module may be pure hardware modules, which include but are not limited to application specific integrated circuits.

In some embodiments, the apparatus further includes a second sending module.

The second sending module is configured to send a second message carrying a TIM broadcast response IE to the STA based on whether the AP accepts to transmit the downlink traffic buffered by the AP on the traffic links indicated by the TIM broadcast request IE.

In some embodiments, the TIM broadcast response IE includes a status field. The the status field includes at least a first indication bit.

A value of the first indication bit is a first bit value, and the first indication bit is configured to indicate to accept to transmit the downlink traffic on a traffic link indicated by the TIM broadcast request IE; or, a value of the first indication bit is a second bit value, and the first indication bit is configured to indicate to refuse to transmit the downlink traffic on a traffic link indicated by the TIM broadcast request IE.

In some embodiments, the TIM broadcast request IE and the TIM broadcast response IE both include TIM broadcast interval fields. The TIM broadcast interval field is configured to indicate a traffic period of TIM information, the TIM information is configured to indicate a STA to receive the downlink traffic buffered by the AP.

In some embodiments, the apparatus further includes a second sending module.

The second sending module is configured to send the TIM information based on the traffic periods of TIM information indicated by the TIM broadcast interval fields in the TIM broadcast response IE.

In some embodiments, the TIM broadcast response IE includes a status field. The the status field includes at least a second indication bit.

The TIM information indicated by a TIM broadcast interval field contained in the TIM broadcast request IE is different from TIM information indicated by a corresponding TIM broadcast interval field contained in the TIM broadcast response IE, and the second indication bit carries a first bit value; or, the TIM information indicated by a TIM broadcast interval field contained in the TIM broadcast request IE is identical to the TIM information indicated by a corresponding TIM broadcast interval field contained in the TIM broadcast response IE, and the second indication bit carries a second bit value.

In some embodiments, the second receiving module 610 is configured to receive a TIM broadcast request message.

The apparatus further includes a second sending module.

The second sending module is configured to send a TIM broadcast response frame based on the TIM broadcast request message. The TIM broadcast response frame is configured to indicate whether to change the one or more traffic links for receiving the downlink traffic buffered by the AP.

In some embodiments, the second sending module is configured to: in response to the TIM broadcast response frame indicating to accept the change of the one or more traffic links for receiving the downlink traffic, send the downlink traffic on changed traffic links indicated by the TIM broadcast request message; or, in response to the TIM broadcast response frame indicating to reject the change of the one or more traffic links for receiving the downlink traffic, send the downlink traffic on the traffic links before the change indicated by the TIM broadcast request IE or the TIM broadcast response IE.

In some embodiments, the first message is a probe request frame or an association request frame; and/or, the second message is an association response frame or a TIM broadcast response frame.

In some embodiments, the second receiving module 610 is configured to receive the first message on an initially associated traffic link or a re-associated traffic link.

A specific example is provided below in combination with any of the above-mentioned embodiments.

The device is enabled to obtain the buffered downlink traffic in the case of multi-link communication, so that the vision of IEEE802.11 to improve system throughput and reduce delay can be realized through the following steps.

In step 1, the STA sends the TIM broadcast request IE on an initially associated traffic link or a re-associated traffic link. The TIM broadcast request IE is carried in the association request frame, the reassociation request or the TIM broadcast request frame, and its specific format is provided as follows.

The TIM broadcast request IE provided by the embodiment of the disclosure is illustrated as FIG. 5. Link 1 and Link 2 indicates the links on which the STA will receive the buffered downlink traffic, and the TIM broadcast interval indicates the traffic period of TIM information. The traffic periods of the traffic links may be identical or different.

In step 2, the AP responds to the TIM broadcast response IE through an association response frame or a TIM broadcast response frame.

The format of the IE responded to by the AP (that is, the TIM broadcast response IE) is illustrated as FIG. 6.

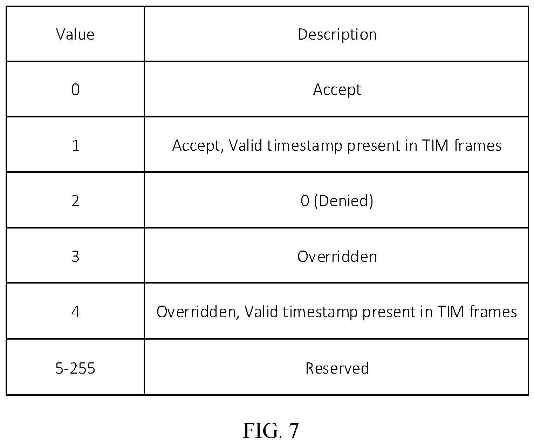

The link ID is the same as the link ID in step 1, and the information contents of the status field is illustrated as FIG. 7.

If the TIM broadcast interval in step 1 is inconsistent with that in step 2, both interval should be adjusted to the interval in step 2, and the value of the status field is set to "2", i.e., "denied". If the two intervals are consistent, then the value of the status field is set to "0".

In step 3, the STA and AP need to identify that they support multi-link communication.

The AP carries the information in a beacon frame, a probe response frame or an association response frame, while the STA carries the information used to inform the AP that it supports multi- traffic links in a probe request frame and an association request frame.

In step 4, if necessary, the traffic links for receiving the downlink traffic buffered by the AP can be changed. If the STA wants to change the traffic links for receiving the downlink traffic buffered by the AP, the STA sends a TIM broadcast request frame to the AP, and the AP responds to the TIM broadcast request frame through a TIM broadcast response frame.

In this way, the device can obtain the buffered downlink traffic during multi-link communication, so that the vision of IEEE802.11 to improve system throughput and reduce delay can be realized.

The embodiment of the disclosure provides a communication device, including a processor, a transceiver, a memory and executable programs stored on the memory and capable of being run by the processor. When the processor runs the executable programs, the control channel detection method applied to a UE provided in any of the foregoing technical solutions, or the information transmission method applied to a STA provided in any of the foregoing technical solutions is implemented.

The communication device may be the aforementioned base station or UE.

The processor may include various types of storage medium, which are non-transitory computer storage medium that can continue to memorize information stored thereon after the communication device is powered down. The communication device includes a base station or a UE.

The processor may be connected to the memory through a bus or the like, and is configured to read the executable program stored in the memory, for example, the methods shown in FIG. 3, FIG. 8 and FIG. 9.

The embodiments of the disclosure provide a computer storage medium having executable programs stored thereon. After the executable programs are executed by the processor, the method shown in any technical solution of the first aspect or the second aspect can be implemented, for example, the method shown in FIG. 3, FIG. 8 and FIG. 9.

FIG. 12 is a block diagram of a UE 800 according to an exemplary embodiment. For example, the UE 800 may be a mobile phone, a computer, a digital broadcasting UE, a message transceiver device, a game console, a tablet device, a medical device, a fitness device and a personal digital assistant.

As illustrated in FIG. 12, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include at least one processor 820 to perform all or part of the steps in the above described method. Moreover, the processing component 802 may include at least one module which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a programmable read-only memory (PROM), a Read-Only Memory (ROM), a magnetic memory, a flash memory, a magnetic or optical disk.

The power component 806 provides power to various components of the UE 800. The power component 806 may include a power management system, at least one power source, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes at least one sensor to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In an exemplary embodiment, the communication component 816 receives a broadcast signal or broadcast associated information from an external broadcast management system via a broadcast channel. In an exemplary embodiment, the communication component 816 further includes a near field communication (NFC) module to facilitate short-range communication. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the UE 800 may be implemented with at least one application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In exemplary embodiments, there is also provided a non-transitory computer readable storage medium including instructions, such as included in the memory 804, executable by the processor 820 in the UE 800, for performing the above method. For example, non-transitory computer-readable storage medium may be a ROM, a RAM, a CD-ROM, a magnetic tape, a floppy disc, an optical data storage device, and the like.

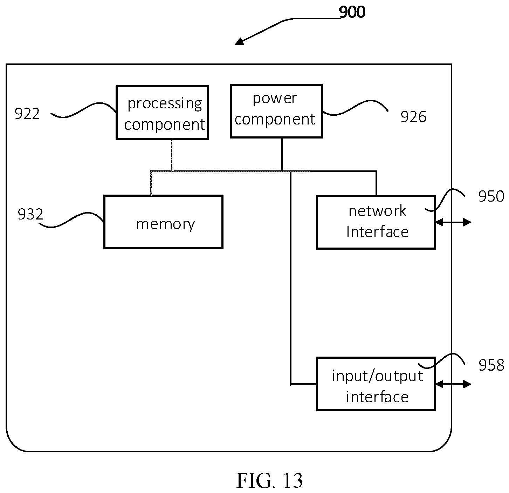

As illustrated in FIG. 13, the embodiment of the disclosure shows a structure of a base station. For example, the base station 900 may be provided as a network-side device. As illustrated in FIG. 9, the base station 900 includes a processing component 922, which includes at least one processors, and a memory resource represented by a memory 932 for storing instructions executable by the processing component 922, such as application programs. The application program stored in the memory 932 may include one or more modules, each module correspondes to a set of instructions. In addition, the processing component 922 is configured to execute instructions to perform the above method applied to the base station, for example, the method shown in FIG. 3, FIG. 8 and FIG. 9.

The base station 900 may also include a power component 926 configured to perform power management of the base station 900, a wired or wireless network interface 950 configured to connect the base station 900 to the network, and an input/output (I/O) interface 958. The base station 900 may operate based on an operating system stored on the memory 932, such as Windows Server^{™}, Mac OS X^{™}, Unix^{™}, Linux^{™}, FreeBSD^{™} or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A data transmission method, comprising:
determining a first message containing a Traffic Indication Map (TIM) broadcast request Information Element (IE), wherein the TIM broadcast request IE is at least configured to indicate traffic links for receiving downlink traffic; and
sending the first message on one of multiple traffic links.

2. The method of claim 1, further comprising:
receiving a second message carrying a TIM broadcast response IE returned based on the first message; and
in response to the TIM broadcast response IE indicating to determine to transmit the downlink traffic on one or more traffic links indicated by the TIM broadcast request IE, receiving the downlink traffic on the one or more traffic links indicated by the TIM broadcast request IE.

3. The method of claim 2, wherein the TIM broadcast response IE comprises a status field, wherein the status field comprises at least first indication bits;
wherein a value of the first indication bit is a first bit value, and the first indication bit is configured to indicate to accept to transmit the downlink traffic on a traffic link indicated by the TIM broadcast request IE;
or,
whereina value of the first indication bit is a second bit value, and the first indication bit is configured to indicate to refuse to transmit the downlink traffic on a traffic link indicated by the TIM broadcast request IE.

4. The method of claim 2, wherein the TIM broadcast request IE and the TIM broadcast response IE both comprise TIM broadcast interval fields;
wherein the TIM broadcast interval field is configured to indicate a traffic period of TIM information, and the TIM information is configured to indicate a Station (STA) to receive the downlink traffic.

5. The method of claim 4, wherein in response to the TIM broadcast response IE indicating to accept, receiving the downlink traffic on the one or more traffic links indicated by the TIM broadcast request IE comprises:
in response to the TIM broadcast response IE indicating to accept and the TIM information indicating that there is downlink data buffered by an Access Point (AP) to be received, receiving the downlink traffic on the one or more traffic links indicated by the TIM broadcast request IE.

6. The method of claim 2, further comprising:
in response to a traffic period indicated by a TIM broadcast interval field contained in the TIM broadcast request IE being different from a traffic period indicated by a corresponding TIM broadcast interval field contained in the TIM broadcast response IE, receiving the TIM information sent by an Access Point (AP) based on the traffic period indicated by the corresponding TIM broadcast interval field contained in the TIM broadcast response IE;
or,
in response to a traffic period indicated by a TIM broadcast interval field contained in the TIM broadcast request IE being identical to a traffic period indicated by a corresponding TIM broadcast interval field contained in the TIM broadcast response IE, receiving the TIM information sent by the AP based on the traffic period indicated by the TIM broadcast interval field contained in the TIM broadcast response IE or the traffic period indicated by the corresponding TIM broadcast interval field contained in the TIM broadcast request IE.

7. The method of claim 2, wherein the TIM broadcast response IE comprises a status field, wherein the status field comprises at least second indication bits;
wherein the second indication bit carries a first bit value, and TIM information indicated by a TIM broadcast interval field contained in the TIM broadcast request IE is different from TIM information indicated by a corresponding TIM broadcast interval field contained in the TIM broadcast response IE;
or,
wherein the second indication bit carries a second bit value, and TIM information indicated by ae TIM broadcast interval field contained in the TIM broadcast request IE is identical to TIM information indicated by a corresponding TIM broadcast interval field contained in the TIM broadcast response IE.

8. The method of claim 2, wherein
in the TIM broadcast request IE, traffic periods of TIM information indicated by TIM broadcast interval fields of different traffic links are the same, or in the TIM broadcast request IE, traffic periods of TIM information indicated by TIM broadcast interval fields of different traffic links are different;
and/or
in the TIM broadcast response IE, traffic periods of TIM information indicated by TIM broadcast interval fields of different traffic links are the same, or in the TIM broadcast response IE, traffic periods of TIM information indicated by TIM broadcast interval fields of different traffic links are different.

9. The method of claim 1, further comprising:
in response to a change of the traffic links for receiving the downlink traffic, sending a TIM broadcast request message;
receiving a TIM broadcast response frame returned based on the TIM broadcast request message; and
receiving the downlink traffic based on the TIM broadcast response frame.

10. The method of claim 9, wherein receiving the downlink traffic based on the TIM broadcast response frame comprises:
in response to the TIM broadcast response frame indicating to accept the change of the traffic links for receiving the downlink traffic, receiving the downlink traffic on changed traffic links indicated by the TIM broadcast request message;
or,
in response to the TIM broadcast response frame indicating to reject the change of the traffic links for receiving the downlink traffic, receiving the downlink traffic on the traffic links before the change indicated by the TIM broadcast request IE or the TIM broadcast response IE.

11. The method of claim 2, wherein the first message is a probe request frame or an association request frame;
and/or,
the second message is an association response frame or a TIM broadcast response frame.

12. The method of claim 1, wherein sending the first message on one of the multiple traffic links comprises:
sending the first message on an initially associated traffic link or a re-associated traffic link.

13. A data transmission method, comprising:
receiving a first message on one traffic link a Station (STA), wherein the first message comprises a Traffic Indication Map (TIM) broadcast request Information Element (IE); and
determining one or more traffic links for receiving downlink traffic from multiple traffic links of the STA based on the TIM broadcast request IE.

14. The method of claim 13, further comprising:
sending a second message carrying a TIM broadcast response IE to the STA based on whether to accept to transmit the downlink traffic on traffic links indicated by the TIM broadcast request IE.

15. The method of claim 14, wherein the TIM broadcast response IE comprises a status field, wherein the status field comprises at least first indication bits;
wherein a value of the first indication bit is a first bit value, and the first indication bit is configured to indicate to accept to transmit the downlink traffic on a traffic link indicated by the TIM broadcast request IE;
or,
wherein a value of the first indication bit is a second bit value, and the first indication bit is configured to indicate to refuse to transmit the downlink traffic on a traffic link indicated by the TIM broadcast request IE.

16. The method of claim 15, wherein the TIM broadcast request IE and the TIM broadcast response IE both comprise TIM broadcast interval fields;
wherein the TIM broadcast interval field is configured to indicate a traffic period of TIM information, and the TIM information is configured to indicate a STA to receive the downlink traffic.

17. The method of claim 16, further comprising:
sending the TIM information based on the traffic periods of the TIM information indicated by the TIM broadcast interval fields in the TIM broadcast response IE.

18. The method of claim 14, wherein the TIM broadcast response IE comprises a status field, wherein and the status field comprises at least second indication bits;
wherein TIM information indicated by a TIM broadcast interval field contained in the TIM broadcast request IE is different from TIM information indicated by a corresponding TIM broadcast interval field contained in the TIM broadcast response IE, and the second indication bit carries a first bit value;
or,
wherein TIM information indicated by a TIM broadcast interval field contained in the TIM broadcast request IE is identical to TIM information indicated by a corresponding TIM broadcast interval field contained in the TIM broadcast response IE, and the second indication bit carries a second bit value.

19. The method of claim 13, further comprising:
receiving a TIM broadcast request message; and
sending a TIM broadcast response frame based on the TIM broadcast request message, wherein the TIM broadcast response frame is configured to indicate whether to change the traffic links for receiving the downlink traffic.

20. The method of claim 19, further comprising:
in response to the TIM broadcast response frame indicating to accept the change of the traffic links for receiving the downlink traffic, sending the downlink traffic on changed traffic links indicated by the TIM broadcast request message;
or,
in response to the TIM broadcast response frame indicating to reject the change of the traffic links for receiving the downlink traffic, sending the downlink traffic on the traffic links before the change indicated by the TIM broadcast request IE or the TIM broadcast response IE.

21. The method of claim 14, wherein the first message is a probe request frame or an association request frame;
and/or,
the second message is an association response frame or a TIM broadcast response frame.

22. The method of claim 13, wherein receiving the first message on one traffic link of the STA comprises:
receiving the first message on an initially associated traffic link or a re-associated traffic link.

23. A data transmission apparatus, applied to a Station (STA), comprising:
a determining module, configured to determine a first message containing a Traffic Indication Map (TIM) broadcast request Information Element (IE), wherein the TIM broadcast request IE is at least configured to indicate traffic links for receiving downlink traffic; and
a first sending module, configured to send the first message on one of multiple traffic links.

24. A data transmission apparatus, comprising:
a second receiving module, configured to receive a first message on one traffic link of a Station (STA), wherein the first message comprises a Traffic Indication Map (TIM) broadcast request Information Element (IE); and
a determining module, configured to determine one or more traffic links for receiving downlink traffic from multiple traffic links of the STA based on the TIM broadcast request IE.

25. A communication device comprising a processor, a transceiver, a memory and executable programs stored on the memory and capable of being executed by the processor, wherein when the processor runs the executable programs, steps of the data transmission method of any one of claims 1 to 12 or the data transmission method of any one of claims 13 to 22 are implemented.

26. A storage medium having executable programs stored thereon, wherein when the executable programs are executed by a processor, steps of the data transmission method of any one of claims 1 to 12 or the data transmission method of any one of claims 13 to 22 are implemented.
